# EUROPEAN PATENT SPECIFICATION

(11) **EP 3 233 568 B1**
(45) Date of publication and mention of the grant of the patent: **21.11.2018**
(21) Application number: 15817181.9
(22) Date of filing: 15.12.2015
(51) Int. Cl.: B60P 3/14, B60P 7/08, B60R 7/02

(54) **A FASTENING SYSTEM**
BEFESTIGUNGSSYSTEM
SYSTÈME DE FIXATION

(30) Priority: 16.12.2014 EP 14198183
(43) Date of publication of application: 25.10.2017
(73) Proprietor: Modul-System HH AB, 431 22 Mölndal (SE)
(72) Inventor: CARLSSON, Anders, 422 50 Hisings Backa (SE)
(74) Representative: AWA Sweden AB
(86) International application number: PCT/EP2015/079861
(87) International publication number: WO 2016/096898

(56) References cited:
- EP-A1- 1 894 773
- DE-A1- 3 330 170
- DE-A1- 4 318 724

## Description

### Field of the Invention

The present invention relates to a fastening system adapted to be attached to an inner wall of a cargo or a back space of a service vehicle.

### Technical Background

It is common practise in the art of service vehicles to equip a back space or a cargo space of an automotive vehicle with module systems for example cupboards, tool holders, shelves or other module units. This is usually made in a separate step after the vehicle has been manufactured, i.e. the equipping of the vehicle in question is made separately from the manufacturing. Before the vehicle is equipped with specialised equipment, usually the back space of the vehicle is provided with an inner floor, usually made of wood, but the floor might also be made of for example an artificial, plastic material. This floor functions as a good support to work, stand and walk upon and is also used as an anchor plate for the module unit. The module unit is often also at least partly attached to the wall and the purpose is to counteract that the unit tip for example in a turn. It is common practise to secure the module unit/units to the wall with fasteners, with screws or the like penetrating the vehicle wall. There is also a risk during acceleration or retardation of the vehicle, that a module system or maybe one module unit thereof can break away which may cause damages. The module units, in particular when they are equipped with tools and material which are included in a toolkit, are usually rather heavy and may in such case present a potential safety risk. During retardation of the vehicle the module system may, if not securely attached, move forward with a large force and which in a serious scenario may break through into the driver cabin and thereby even cause personal injuries.

Alternatively to securing the module system directly to the vehicle wall the module system can be attached to a rail, which makes the module system more flexible, i.e. it can be moved without making more holes in the vehicle wall. One such example is shown in EP 1 894 773 A1 that corresponds to the preamble of claim 1. However, these kinds of rails are usually fastened directly to the vehicle wall, by for example screws.

Often the back space is also equipped with inner wall panels, usually made of wood, which are fastened to the inner wall of the back space using screws or rivets in order to make a nice appearance, reduce noise etc. Further, other accessories such as lamps, hooks, nets, cable holders etc are usually also attached directly to the inner wall of the vehicle using screws or the like.

However, both rails, walls and other accessories which are being directly attached to the vehicle walls by using screws or rivets are causing damages in the vehicle wall, i.e. it is weakening the car body. By drilling or screwing into the wall, the protecting barrier provided by the paint is damaged thereby exposing the sheet metal to corrosion resulting from i.e. moisture. Further, cables and other parts which may be arranged between an inner wall and an outer wall of the back space may be damaged by the drill or the screws.

Hence, there is a need for a system which does not cause weaknesses of the vehicle body, or damages the protecting paint layer or other parts, but which in the time is just as reliable.

### Summary of the Invention

The object of the present invention is to provide a fastening system that overcomes the above issues.
The invention is based on the insight that by having a fastening system, wherein an item is secured to the fastening rail with securing elements at least some of the screws which usually are used to fasten the items to the vehicle wall are eliminated, and hence some of the damages on the vehicle body can be reduced.

The invention relates to a fastening system adapted to be attached to an inner surface of a cargo or a back space of a service vehicle, with the features of claim 1.

The fastening rail together with the item, or the inner wall panel, and the securing element provide means for great customization of the interior design of the back space. The fastening rail may provide fastening zones for module systems such as shelves, cupboards, storage boxes or tool holding equipment. The fastening rail may also comprise fastening zones for fastening inner wall panels or covering panels for covering inner ceiling or floor surfaces of a back space of a service vehicle. Items may also be a cable holder for holding cables, a profile for covering the joint where an inner wall panel and a roof or floor covering panel meet. An item may also be a holder for a lighting rail or a holder for other equipment. The item may be any other item a user would like to attach to the inner surface of the back space. The fastening rail may be cut into shorter elements, in order to fit different sized and shaped back spaces of vehicles, while still remaining its function. By pressing the item, for example an inner wall panel against at least a part of the fastening rail by at least one securing element, the inner wall panel may be attached to the inner vehicle wall, i.e. the inner surface of a back space of a service vehicle, without penetrating the vehicle wall. The same applies to the other items described above. The elongated fastening rail comprises a back side for facing and/or being in contact with the inner surface when the elongated fastening rail is attached to the inner surface of the service vehicle. The elongated fastening rail further comprises a front side arranged oppositely from said back side wherein said undercut groove comprises an opening. The front side is facing the centre of the interior volume contained within the cargo or back space of the service vehicle. A ledge is extending from the back side towards the front side of the fastening rail. One ledge may be provided above the undercut groove and one ledge may be provided below the undercut groove. A ledge may form a part of said undercut groove. A ledge provided above the undercut groove may act as a support for an edge of an inner wall panel during and/or after an inner wall panel has been fastened to the fastening rail. When an inner wall panel is to be fastened to the fastening rail the inner wall panel may be arranged such that an edge of the inner wall panel rests or is offloaded onto the ledge. The inner wall panel may then be secured to the fastening rail by a securing element. After the inner wall panel is secured to the fastening rail the support exerted by the ledge to the inner wall panel may reduce any transversal or radial loads, on the securing element. For instance if the securing element is a securing screw, the screw may have reduced dimensions, or a screw having smaller diameter or a weaker material may be used as securing element.

The undercut groove may be adapted to fasten an item to it during use. This allows for equipment or vehicle interior to be attached to the fastening rail and enables step-less manoeuvrability of the equipment or the interior giving an almost unlimited amount of different interior design possibilities. The undercut groove may have a cross-section which is T-shaped. Items forming part of s a module system or module units may be securely connected to said undercut groove. This way the module system or the module units can be safely arranged to the inner surface of the back space without making any damage, for example holes, in the wall of the back space. Alternatively, other items may also be attached to the undercut groove. The module system or the module units do not have to be connected to the undercut groove, but may be connected to the fastening rail in any other suitable way, for example screwing into the fastening rail.

According to at least one exemplary embodiment the back portion and/or ledge has a longitudinal extension in the longitudinal direction of said fastening rail. The ledge having and/or the back portion having a longitudinal extension in the longitudinal direction of the fastening rail is advantageous in that a larger contacting area may be ensured between an inner wall panel fastened to the fastening rail and the fastening rail.

According to at least one exemplary embodiment the at least one elongated fastening rail further comprises a front portion, protruding from said ledge, forming a wall receiving groove together with said ledge and at least a portion of said back portion, of said elongated securing rail. This helps with holding the inner wall panel in place during and/or after fastening the wall panel to the fastening rail. The groove limits movement of the inner wall panel, in a direction perpendicular to the inner surface of the cargo space or back space of the service vehicle, towards the centre of the cargo space or back space of the service vehicle. In addition the wall receiving groove secures and prevents inner wall panels from moving during a vehicle crash event. The wall receiving groove is vertically separated by the undercut groove. The fastening rail may be arranged having a wall receiving groove arranged above the undercut groove and a ledge arranged below the undercut groove. When an inner wall panel is arranged between two fastening rails, with the above configuration the inner wall panel may first be inserted into a wall receiving groove of a first fastening rail and thereafter pushed into contact with the back portion of the second fastening rail. The wall receiving groove of the first fastening rail unloads and holds the inner wall panel at least partly in place during these steps. The inner wall panels may then be secured to the first and second fastening rails by securing elements.

According to at least one exemplary embodiment the wall receiving groove has a substantially U-shaped cross-section in a geometric plane transverse to the longitudinal direction of said elongated fastening rail. The wall receiving groove may have a U-shaped cross-section, a cross-section being tapered in a direction from the bottom of the groove towards the opening of the groove or in an opposite direction. Tapering the groove towards the bottom of the groove may help with securing an inner wall panel and decrease the number of securing items needed for fastening an inner wall panel to the fastening rail. It may also reduce vibration between the inner wall panel and the fastening rail. Due to the large area of the inner wall panel, vibrations transferred to the inner wall panel may otherwise results in that the inner wall panel functions as a speaker amplifying the vibrations. The groove walls of the wall receiving groove may be provided with a wavy pattern resulting in that only portions of the groove walls being in contact with an edge portion of an inner wall panel when said inner wall panel is fastened to the fastening rail.

According to at least one exemplary embodiment said item is included in said fastening system. Thus, the fastening system includes the fastening rail, at least one securing element and the item or an inner wall panel. According to at least one exemplary embodiment, there is provided a fastening system adapted to be attached to an inner wall of a cargo or a back space of a service vehicle, said fastening system comprises at least one elongated fastening rail adapted to be attached to said inner wall of said back space, at least one wall panel, and at least one securing element, wherein said wall panel is adapted to be pressed against at least a part of said fastening rail by said at least one securing element. The fastening rail together with the inner wall panel and the securing element provide means for great customization of the interior design. The system may hence be an inner wall panel system. The fastening rail may provide a common element where further tools or inner wall panel may be attached too and it may provide fastening zones for module systems such as shelves, cupboards, storage boxes or tool holding equipment. At the same time it may provide a fastening area for the inner wall panel. The inner wall panel may be secured to this fastening area using the securing element. The fastening rail may be cut into shorter elements, in order to fit different sized and shaped back spaces of vehicles, while still remaining its function. By pressing the wall panel against at least a part of the fastening rail by at least one securing element, the inner wall panel may be attached to the vehicle wall without penetrating the vehicle wall.

According to at least one exemplary embodiment said securing element is a separate element, which is not a part of fastening rail. With the term separate it is meant that the securing element is in one piece and not a part of neither the fastening rail nor the item. The item may be an inner wall panel and/or cable holder or any other item a user would like to attach to the inner surface of the back space. That the securing element is a separate element is advantageous in that the securing element may be adapted after what material the item is made of and what thickness the item has. Further, a mix of different securing elements may be used for fastening the item or an inner wall panel to the fastening rail. Further the securing element may be chosen depending on what expected load will be applied on the item. This means that cheaper securing element may be used when the item only is exposed to small loads.

According to at least one exemplary embodiment the item or inner wall panel is adapted to be pressed between the fastening rail and the at least one securing element. Pressing the item or inner wall panel between the fastening rail and the securing element provides a robust way of fastening the item or inner wall panel to the fastening rail. The securing element may be chosen depending on the material of the item.

According to at least one exemplary embodiment the securing element is a screw, comprising a screw head and an at least partly threaded portion, wherein the screw head is adapted to press against the item during use and to be screwed into the fastening rail. This is advantageous since it is a simple, cheap and robust method of attaching the item or an inner wall panel to the fastening rail. The item or inner wall panel can thereby be mounted with a screwdriver, and without further need for advanced special tools. Screws with different tool engaging portions may also be chosen i.e. screws which require unusual tools may provide added security means. The screw head may be adapted to press against the item or inner wall panel directly or via a force spreading member such as a washer. If the screw is a self drilling screw the flexibility of the system may be higher. According to at least one exemplary embodiment a washer is adapted to be arranged between said screw head and said item or inner wall panel during use.

By having a securing track, instead of securing holes, the mounting of, for example, an inner wall panel is simplified since the screw only needs to be screwed in aligned vertically, and not vertically and horizontally. This allows for a great adaptability. Further using a securing track, instead of securing holes, allows for the use of a great amount of screws to be used if necessary. The limitations would then be how many screws that can fit next to each other and not the number of predrilled holes. Another advantage of fastening the item or inner wall panel to the fastening rail instead of attaching, for example, the inner wall panel by screwing it directly to the sheet metal of the inner wall, no drilled holes through the inner wall of the back space are necessary, which may weaken the wall and introduce rust or corrosion, which in turn with time further weaken the wall.

By having two oppositely arrange ridges adapted to be screwed into using a self tapping screw allows for a simple mounting of the items or inner wall panel.

According to one exemplary embodiment the at least one of said ridges of said screw securing track during use, is in contact with said inner wall panel. Having at least one of the ridges in contact with the inner wall panel is advantageous in that it ensures that a high pressure is achieved between the ridge and the inner wall panel fastened to the fastening rail. A top portion of either or both of the two ridges may have a sharp or pointy shape adapted for indenting the inner wall panel being pressed against the fastening rail by the securing screw or securing element. Such a shape of a top portion would further help with securing the inner wall panel to the fastening rail, and reduces the risk for movement of the inner wall panel along a direction transverse to the axial direction of the securing screw. Such a shape may be advantageous when the inner wall panel is in a softer material such as a plastic, wood or a laminated wood material.

According to one exemplary embodiment the elongated securing rail further comprise a wall contacting area adapted to be attached to said inner surface of said cargo or back space of said service vehicle. A wall contacting area is the area which will be in contact with the inner wall of the back space of the service vehicle.

According to one exemplary embodiment at least one of the ridges of the screw securing tracks extending in the longitudinal direction of the securing track comprises grooves. This is advantageous since grooves improve the securing contact between a screw and the screw securing track. Improving the securing contact, between the securing screw and the screw securing track, has the effect that the item can take a higher force load. This further increases safety during a vehicle crash event.

According to one exemplary embodiment the wall contacting area is roughened for providing greater surface area.

According to one exemplary embodiment the wall contacting area comprises grooves extending in the longitudinal direction of the rail. Having grooves extending in the longitudinal direction of the rail or a roughened area on the wall contacting area a larger surface area is created. For example, if the fastening rail is attached to the wall of the service vehicle by adhesive a larger surface area is advantageous since it creates a better contact between the fastening rail and inner surface of the back space.

Further according to one exemplary embodiment the fastening rail is adapted to be attached to the inner surface by adhesive. This can be done through applying adhesive to the wall contacting area. It is advantageous to use adhesives for attaching the fastening rail against the inner wall as opposed to using the more standard method of attaching the a fastening rail by screwing it directly to the sheet metal of the inner surface. Other standard method involves drilling holes straight through the wall and using a nut and bolt for attaching the fastening rail. The holes created using standard methods weaken the inner wall and the back space and often introduce rust, which in turn with time may further weaken the wall.

According to one exemplary embodiment the adhesive used, for attaching the fastening rail to the vehicle wall, is a glue or coated on a tape. Using a tape creates a simple and easy way of attaching the fastening rail to the inner wall of the vehicle. The tape may be double sided i.e. having both sides with adhesive properties. Further the tape can be pre-attached to the fastening rail on the surface facing the inner wall of the vehicle. When mounted the strip of material protecting the side of the double sided tape, which will be attached to the inner wall of the vehicle, is removed. Thereafter the rail can mounted on the wall. With tape there is also no need to wait until the fastening rail can be loaded. Glue is a cheap way of attaching the fastening rail to the inner surface of the vehicle wall. Glue often offers great performance in relation to price. The glue may be sold separately or come packaged with the fastening system. Alternatively, a tape and an adhesive can be used together. The tape may prefix the fastening rail, i.e. hold the fastening rail in place while the adhesive cures. The adhesive may be a one component adhesive. For example the 3M™ Hybrid Adhesive Sealant 760 may be used. However, any other suitable adhesive may be used. It is preferably that it can take up the forces the fastening rail is going to be exposed to.

According to one exemplary embodiment said fastening rail is adapted to be attached to said inner wall by two different adhesives, wherein said first adhesive is a fast curing adhesive and said second adhesive is an adhesive which cures slower than said first adhesive. This makes it possible to adjust the fastening rail to the right position before the fast curing adhesive has been cured. The fast curing adhesive will fix the fastening rail in a correct position until the other adhesive, which will take up the forces during us, has been cured. The fast curing adhesive may be a tape.

Further according to one exemplary embodiment said securing element is a clip. The clip may be a snap clip. A snap clip improves the elastic properties of the clips. When a snap clip is mounted the user elastically deforms the snap clip, in order to place it in its intended position. After the clip has been mounted the clip will then want to return to its initial unloaded shape. If the clip cannot return to its initial shape, the result will be that the item will be preloaded with a force due to the clips strive to return to its initial shape. This increases the pressing force the clips exert on the item. It also makes mounting of the clips easier.

According to one exemplary embodiment said item is a wall panel.

The wall panel may be made of wood, laminated wood, medium-density fibreboard (MDF), composite wood, plywood, particle wood or other engineered wood panels. The wall panel may also be made from plastic materials. Softer panels may also be used as long as the force from the screw head is spread over a larger area of the wall panel by means of spacers or by adding a strip of metal or other harder material along the bottom edge of the wall panel.

According to at least one exemplary embodiment said wall panel has outer dimensions, which are equal or smaller than the dimensions of a EUR-pallet.

A EUR-pallet may also be called Euro-pallet or EPAL-pallet and is the standard European pallet as specified by the European Pallet Association (EPAL). The EUR-pallet has at the time of writing a dimension of 1200x800 mm. The dimensions are not limited to be according to standard European pallets as specified by the European Pallet Association (EPAL). They may for example have dimensions according to pallets of other standards, for example American standards. If the wall panel have the same outer dimensions as a EUR-pallet it can easily be transported thereon. However, the wall panel is not limited to have these dimensions.

According to one exemplary embodiment said wall panel has essentially the same length as the fastening rail.

According to one exemplary embodiment said fastening rail comprises at least one wall panel supporting element. By having at least one wall panel supporting element a wall panel can be supported by the fastening rail and be held in a correct position before it is secured to the fastening rail by the securing element. This enables a user to mount the wall panel alone without needing help of arranging the wall panel in a correct position.

According to one exemplary embodiment said item is cable holder, an illuminating device, a hook a fastening bracket or a lashing eyelet.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise.

Other objectives, features and advantages of the present invention will appear from the following detailed disclosure, as well as from the drawings.

### Brief Description of the Drawings

The above, as well as additional objects, features and advantages of the present invention, will be better understood through the following illustrative and non-limiting detailed description of exemplary embodiments of the present invention, with reference to the appended drawings, where the same reference numerals will be used for similar elements, wherein:
Fig. 1 shows an open-up perspective view of a service vehicle comprising a fastening system according to the invention showing different types of items, fastened to the fastening rails,
Fig. 2 shows an enlarged perspective view of the cut out a in Fig. 1 with a fastening bracket according to a first embodiment of an item fastened to the fastening rail,
Fig. 3 shows an enlarged perspective view of the cut out b in Fig. 1 with an illuminating device according to a second embodiment of the item fastened to the rail,
Fig. 4 shows an enlarged perspective view of the cut out c in Fig. 1 with a lashing eyelet, according to a third embodiment of the item, fastened to the fastening rail,
Fig. 5 shows an enlarged perspective view of the cut out d in Fig. 1 with a cable holder, according to a fourth embodiment of the item, fastened to the fastening rail,
Fig. 6 shows an enlarged perspective view of the cut out e in Fig. 1 with a cargo net, according to a fifth embodiment of the item, fastened to the fastening rail,
Fig. 7 shows an enlarged perspective view of the cut out f in Fig. 1 with a hanging hook, according to a sixth embodiment of the item, fastened to the fastening rail,
Fig. 8 shows an open-up perspective view of a service vehicle comprising a fastening system according to another embodiment of the invention with wall panels fastened to the fastening rail,
Fig. 9 shows one embodiment of the fastening rail in Fig. 8 and in Fig. 1 in perspective,
Fig. 10 shows an enlarged partial view of the fastening system in the cut out g in Fig. 8,
Fig. 11a shows the cross section B-B of the fastening system in Fig. 10,
Fig. 11b-e shows alternative cross section shapes of the cross section B-B of the fastening system in Fig. 10,
Fig. 12a shows a fastening system with a fastening element according to a second embodiment shown in a similar view as Fig. 10,
Fig. 12b shows the cross section A-A of the fastening system in Fig. 12a, however without the inner side wall of the service vehicle,
Fig. 13 shows a partial perspective view of a fastening system according to another embodiment of the invention arranged close to the inner ceiling of a service vehicle,
Fig. 14 shows a partial perspective view of a fastening system according to another embodiment of the invention arranged close to the inner floor of a service vehicle.

All the figures are highly schematic, not necessarily to scale, and they show only parts which are necessary in order to elucidate the invention, other parts being omitted or merely suggested.

### Detailed Description of Exemplary Embodiments

Embodiments of the invention will be described in more detail in the following with reference to the accompanying drawings.

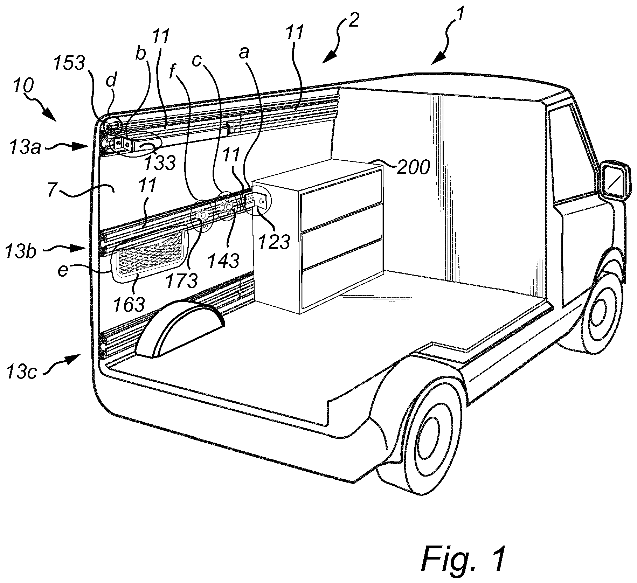

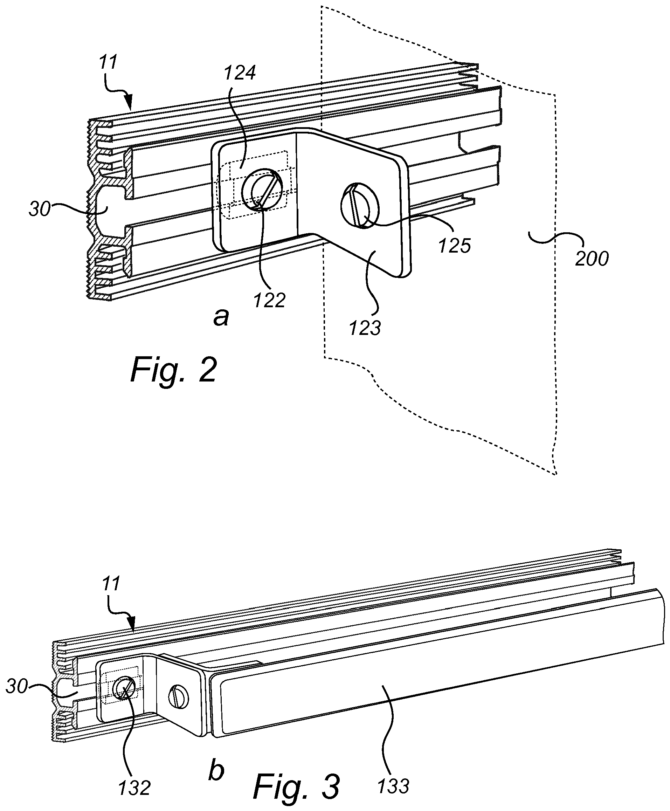

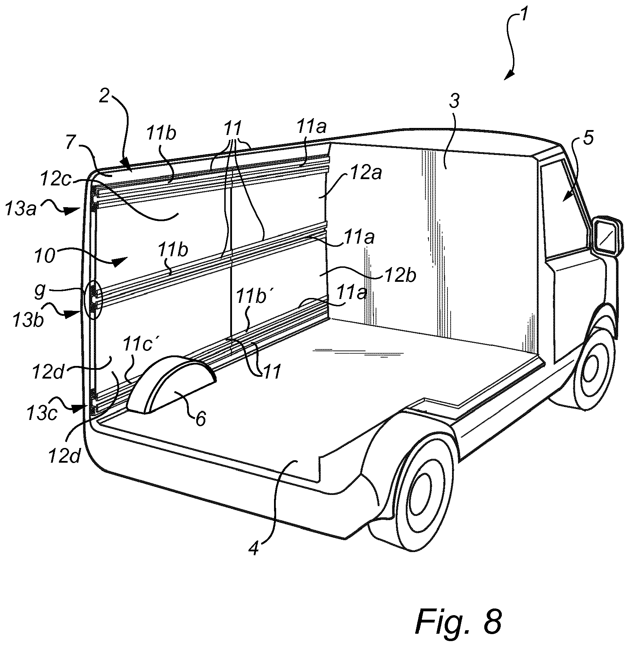

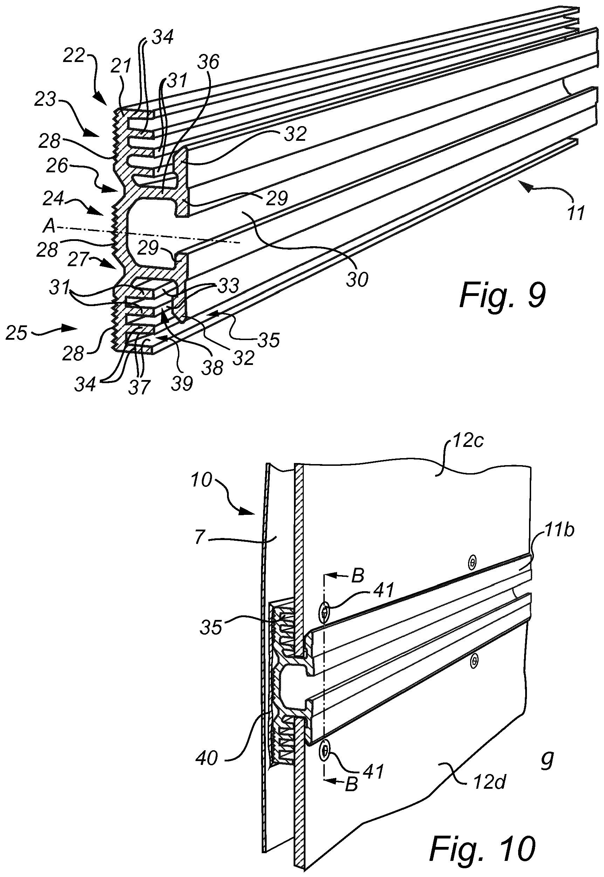

Fig. 1 shows a back space 2 of a service vehicle 1 comprising a fastening system 10. However, the back space could be a cargo space. The fastening system 10 comprises several fastening rails 11, several wall items 123, 133, 143, 153, 163, 173 and several securing elements, not shown in Fig. 1, see Fig. 2-7. The fastening rails 11 are attached to the inside surface of a vehicle wall, i.e. to the inner surface 7 of the back space 2 of the service vehicle 1. The fastening rails 11 are orientated in the main forward direction of the service vehicle 1 i.e. in the longitudinal direction of the vehicle 1. However depending on the shape of the back space there may be occasions where the fastening rails may be mounted transversely or partly transversely in relation to the forward direction of the service vehicle. The fastening rails 11 are comprised in different sets of fastening rails, a first set 13a, a second set 13c, and a third set 13b of fastening rails in a similar manner as in Fig 8. This is, hence, further explained in connection with Fig. 8, with the difference that in Fig.1 there are no inner wall panels attached to the fastening rails 11. Further, the fastening rails 11 comprises the same design as the fastening rail 11 in Fig. 9 and will hence be further discussed in connection with Fig. 9.

In Fig. 1 different items are fastened to the fastening rails 11. The following items are shown: a fastening bracket 123 for fastening a cupboard 200. Only one bracket is shown. More brackets may be used in order to better secure the cupboard; an illumination device, i.e. a lamp 133 fastened to an upper fastening rail; a lashing eyelet 143 fastened to the middle fastening rail; a cable holder 153 for holding cables fastened to the upper fastening rail; a cargo net 163 for holding cargo fastened to the fastening rail and a hook 173 for hanging items fastened to the middle fastening rail. Other items may in a similar way be arranged to the fastening rails 11.

All items may be fastened by different types of securing elements. The items may be secured to the undercut groove 30 of the fastening rail, see Fig. 9. Further the items may also be secured to the securing track 35 of the fastening rail, see Fig. 9. It is also possible to combine fastening of items using both the undercut groove 30 and the securing track 35. This increases the fastening possibilities of the fastening system.

Fig. 2 shows an enlarged view of the cut out a in Fig. 1 of the fastening rail 11 with a fastening bracket 123 for fastening a cupboard 200 or a shelf. The fastening bracket 123 comprises means, here in shape of openings, for fastening the bracket to the cupboard 200 with for example a screw 125. The fastening bracket 123 has an L-shaped form. The bracket 123 is attached to the fastening rail 11 by a securing element in the form of a threaded bolt 122. The bolt 122 engages the fastening bracket 123 by pressing the fastening bracket between the head of the screw and the fastening rail 11. The opposite part of the bolt engages a fastening element 124, which works as nut and which is inserted in the undercut groove 30 showing the fastening rail 11. The example shows a bolt but other alternative securing elements may be used.

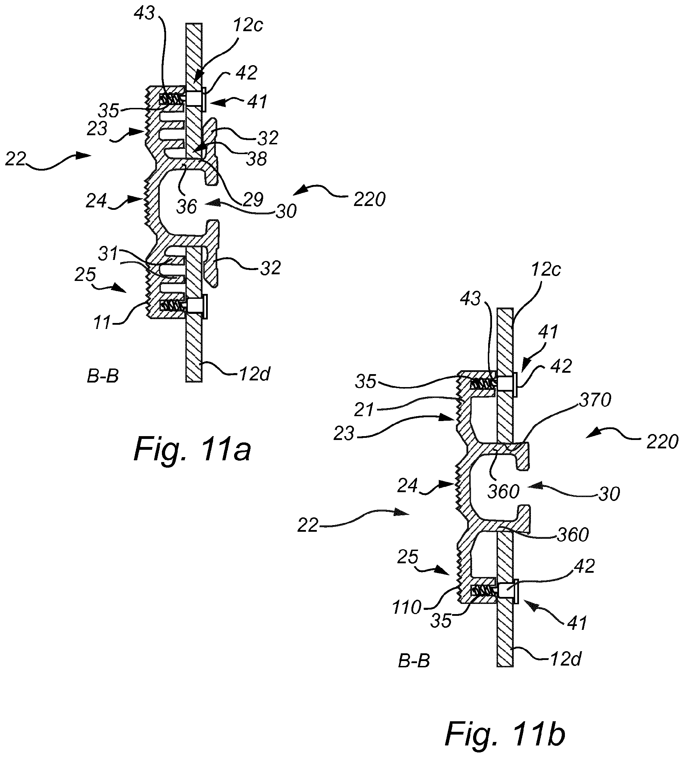

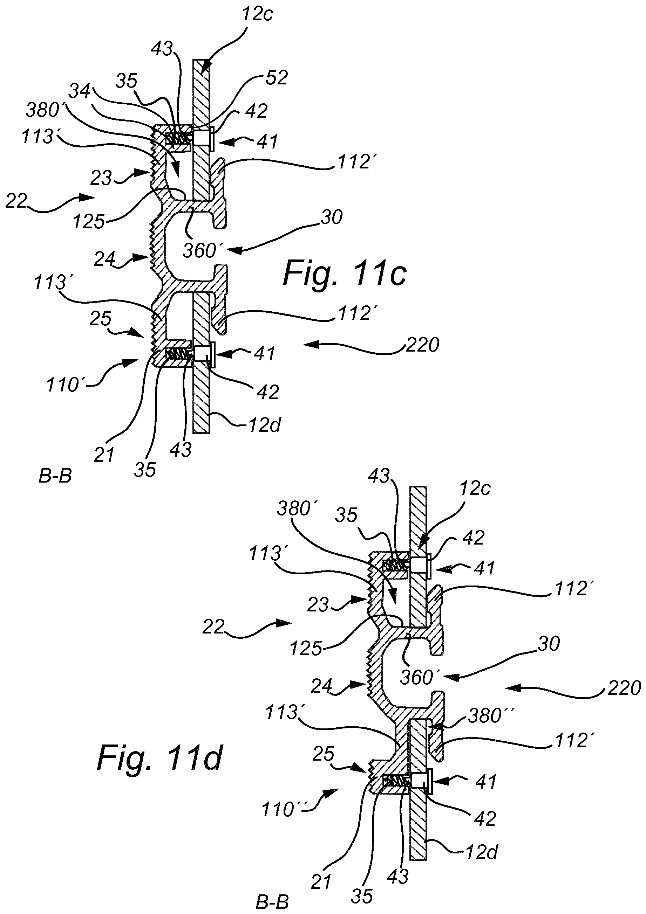

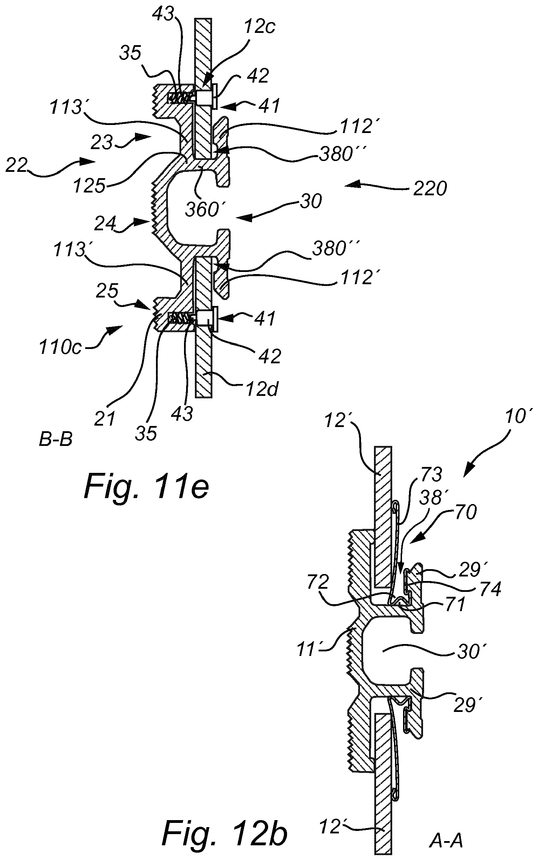

Fig. 3 shows an enlarged view of the cut out b in Fig. 1 of the fastening rail 11 having a lighting device 133, i.e. an illuminating device, fastened to the fastening rail 11. The lighting device 133 is fastened by being pressed between a securing element 132, i.e. a screw or a bolt, and the fastening rail 11. The lighting device may be fastened to the rail 11 in the same way as the fastening bracket 123 in Fig. 2 i.e. to the undercut groove 30. The lighting device 133 may also be secured to the fastening rail by the securing track 35, shown in Fig. 9 as described in connection with Fig. 10 and Fig. 11, except that instead of the wall panels in Fig. 10 and Fig. 11 the lightning device is fastened to the securing track 35.

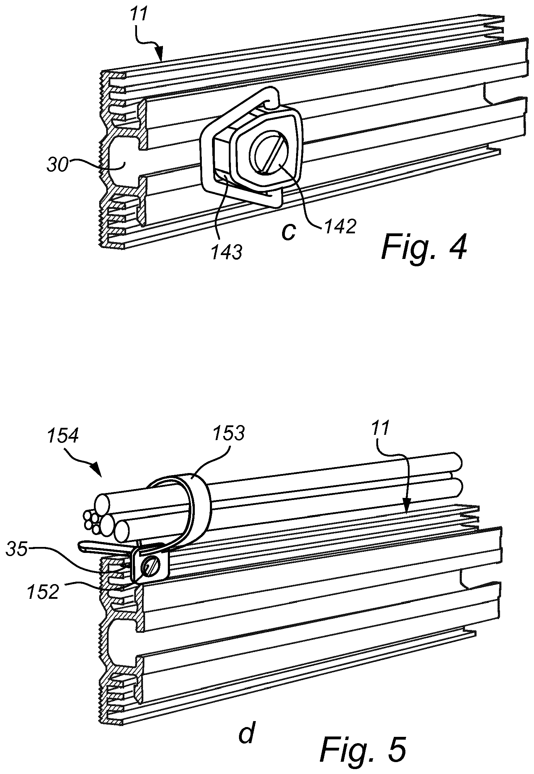

Fig. 4 shows an enlarged view of the cut out c in Fig. 1 of the lashing eyelet 143 fastened to the undercut groove 30 of the fastening rail 11. The lashing eyelet may be used for securing cargo or equipment in the service vehicle. The lashing eyelet is fastened to the fastening rail 11 by a securing element 142, i.e. a screw or a bolt, in the same way as the fastening bracket 123 in Fig. 2.

Fig. 5 shows an enlarged view of the cut out d in Fig. 1 of the cable holder 153, fastened to the fastening rail 11. The cable holder 153 may be used for holding, and for making cable routing simple and safe. The cable holder 153 is secured to the fastening rail 11 by using a securing element 152 in the shape of a screw, which is screwed into the securing track 35. Different types of cable holders, for holding different types and amount of cables may be secured to the fastening rail 11. The cable holder may alternatively be arranged to the undercut groove.

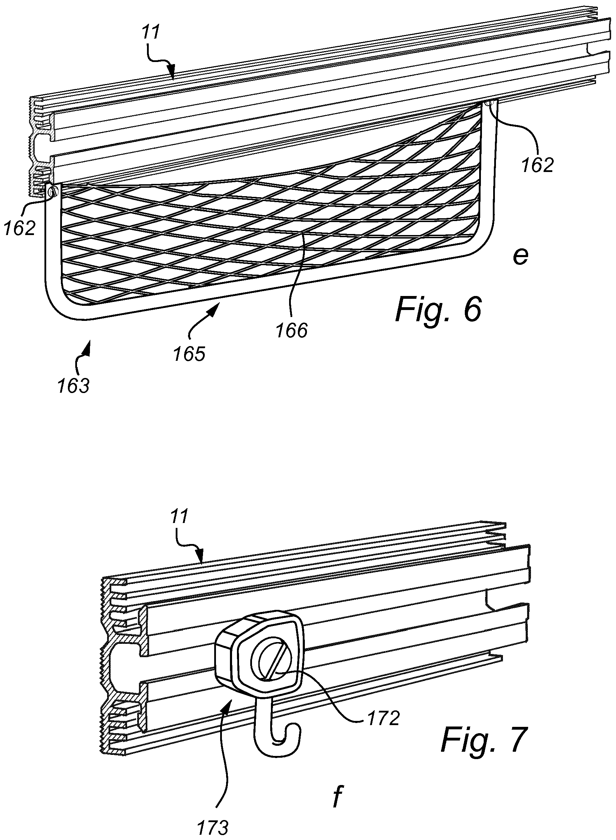

Fig. 6 shows an enlarged view of the cut out e in Fig. 1 of the cargo net 163, fastened to the fastening rail 11. The cargo net comprises a net 166 and a frame 165 for fixating the net 166. The cargo net 163 is secured to the fastening rail 11 by being pressed against the fastening rail 11 by two securing elements 162 in a similar way as the cable holder 153 in Fig. 5. The cargo net may alternatively be arranged to the undercut groove.

Fig. 7 shows an enlarged view of the cut out f in Fig. 1 of the hanging hook 173 fastened to a fastening rail 11. The hanging hook 173 comprises at least one hook. The hanging hook 173 is secured to the fastening rail 11 by a securing element, for example a bolt, in a similar way as the fastening bracket 123 in Fig. 2.

Fig.8 shows a back space 2 of a service vehicle 1 comprising a fastening system 10 according to another embodiment. The fastening system 10 comprises of several fastening rails 11, several items in the shape of inner wall panels 12a, 12b, 12c, 12d, and several securing elements, not shown in Fig. 8, see Fig. 10. The fastening rails 11 are attached to the inside surface of a vehicle wall, i.e. to the inner surface 7 of the back space 2 of the service vehicle 1. The fastening rails 11 are orientated in the main forward direction of the service vehicle i.e. in the longitudinal direction of the vehicle. However depending on the shape of the back space there may be occasions where the fastening rails 11 may be mounted transversely or partly transversely in relation to the forward direction of the service vehicle. The fastening rails 11 are comprised in different sets of fastening rails, a first set 13a, a second set 13c, and a third set 13b of fastening rails.

The first set of fastening rails 13a is arranged in the upper part of the back space 2 and it comprises of two fastening rails 11, a first fastening rail 11a and a second fastening rail 11b. The first fastening rail 11a is arranged close to the wall 3 separating the back space 2 with the driver's compartment 5. The second fastening rail 11b is arranged such that one end of the first fastening rail 11a faces and is arranged in contact with an end of the second fastening rail 11b.

The second set of fastening rails 13c comprises of three fastening rails 11a, 11b', 11c'. The second set of fasteners 13c are arranged in the lower part of the back space 2, near the cargo floor 4. The first fastening rail 11a is arranged close to the wall 3 separating the back space 2 with the driver's compartment 5. The second fastening rail 11b' is arranged such that one end of the first fastening rail 11a faces and is arranged in contact with an end of the second fastening rail 11b'. The other end of the second fastening rail 11b' is arranged close to the wheel housing 6. The second fastening rail 11b' is shorter than the first fastening rail 11a in the second set of fastening rails 13c. The third fastening rail 11c' is arranged on the other side of the wheel housing 6, which is between the wheel housing 6 and a back door (not shown) of the service vehicle 1.

The third set of fastening rails 13b is arranged in between the first set and the second set of fastening rails 13a, 13b, and it comprises of two rails 11, a first fastening rail 11a and a second fastening rail 11b. The first fastening rail 11a is arranged close to the wall 3 separating the back space 2 with the driver's compartment 5. The second fastening rail 11b is arranged such that one end of the first fastening rail 11a faces and is arranged in contact with an end of the second fastening rail 11b.

That each second fastening rail 11b, 11b' is arranged such that one end of each first fastening rail 11a faces and is arranged in contact with an end of a respective second fastening rail 11b is to accomplish that a rectilinear securing track is formed. That is, the fastening rails are arranged in a substantially straight line one after the other.

Alternatively, instead of having two or three fastening rails arranged such that a rectilinear track is formed, there may be more or only one fastening rails in each set of fastening rails. The length of the fastening rails may be the same or differ. The ends of two fastening rails in a set of fastening rails 13a, 13b, 13c may also be joined together end to end by a coupling element (not shown). Such a coupling element could improve the strength of the fastening system. They may also be arranged with a distance between each other.

The fastening rails 11, i.e. all fastening rails 11a, 11b, 11b', 11c' in all sets of fastening rails 13a, 13b, 13c are fastened to the inner surface of the vehicle wall 7 by an adhesive. Each set of fastening rails are arranged essentially parallel to each other and in the longitudinal direction of the service vehicle 1.

A first wall panel 12a is arranged to the vehicle inner surface 7 by arranging it between the first fastening rail 11a of the first set of fastening rails 13a and the first fastening rail 11a of the third set of fastening rails 13b, by having an upper portion of the inner wall panel 12a arranged to the first fastening rail 11a of the first set of fastening rails 13a and a lower portion arranged to the first fastening rail 11a of the third set of fastening rails 13b.

A second wall panel 12b is arranged to the vehicle inner surface 7 by arranging it between the first fastening rail 11a of the third set of fastening rails 13b and the first fastening rail 11a of the second set of fastening rails 13c, by having an upper portion of the inner wall panel 12b arranged to the first fastening rail 11a of the third set of fastening rails 13b and a lower portion arranged to the first fastening rail 11a of the second set of fastening rails 13c.

A third wall panel 12c is arranged to the vehicle inner surface 7by arranging it between the second fastening rail 11b of the first set of fastening rails 13a and the second fastening rail 11b of the third set of fastening rails 13b, by having an upper portion of the innet wall panel 12c arranged to the second fastening rail 11b of the first set of fastening rails 13a and a lower portion arranged to the second fastening rail 11b of the third set of fastening rails 13b.

A fourth wall panel 12d is arranged to the vehicle inner surface 7by arranging it between the second fastening rail 11b of the third set of fastening rails 13b and the second fastening rail 11b' and the third fastening rail 11c' of the second set of fastening rails 13c, by having an upper portion of the inner wall panel 12d arranged to the second fastening rail 11b of the third set of fastening rails 13b and a lower portion arranged to the second fastening rail 11b' and the third fastening rail 11c' of the second set of fastening rails 13c.

Further reference to how the wall panels 12, 12a, 12b, 12c, 12d are arranged to the fastening rails 11, 11a, 11b, 11c, 11d is shown in Fig. 10 where it is shown how the wall panel 12c is arranged and attached to the second fastening rail 11b of the third set of fastening rails. The other inner wall panels 12b, 12c, 12d shown in Fig. 1 are attached to respective fastening rail in a similar way. The wall panels 12a, 12b, 12c, 12d each has a length which is essentially equal to the length of the fastening rails 11a, 1b. They may however be longer or shorter. The wall panels 12a, 12b, 12c, 12d may also additionally be fastened to the inner surface 7 of the service vehicle by using hook and loop fasteners in order attach the inner wall panel to the inner surface 7 further in order to avoid clatter.

The fastening system 10 may also be mounted on the wall 3 separating the driver's compartment 5 and the back space 2 and onto an inner wall (not shown) opposite inner surface 7.

Fig. 9 shows one of the fastening rails 11a, 11b, 11b', 11c' in Fig.8. All fastening rails 11a, 11b, 11b', 11c' have the same cross-section, however the length of the fastenings rails may differ. The fastening rails 11a, 11b, 11b', 11c' will hence be described as fastening rail 11. The fastening rail 11 is preferably made from metal i.e. aluminium or steel which preferably has been formed from a sheet of metal, forged from molten metal or extruded. The fastening rail may also be made from high strength composites or engineering plastics.

The fastening rail 11 is an elongated element. The fastening rail comprises a wall contacting portion 21. The wall contacting portion 21 comprises a back surface 22, , i.e. a wall contacting area 22, which will be facing and lying against the inner surface 7 of the vehicle wall 1 when mounted to the vehicle wall 1. The back surface 22 is divided into different adhering zones, two outer adhering zones 23, 25 and a middle adhering zone 24 between the two outer adhering zones 23, 25. The adhering zones 23, 24, 25, are adapted to be connected to the vehicle wall by adhesives.

The fastening rail 11 may consist of fewer or more adhering zones depending on what loads that are applied to the fastening rail. The adhering zones 23, 24, 25 comprise grooves 28 extending in the longitudinal direction of the fastening rail 11. The grooves 28 increase the contact area between the adhesive and the adhering zones 23, 24, 25. Other alternatives to the grooves are surface pores, a course surface, an irregular surface, surface dimples, surface recesses or surface protrusions extending in the longitudinal direction.

Between the outer adhering zones 23, 25 and the middle adhering zone 24 are adhesive expansion volumes, 26, 27 arranged. The adhesive expansion volumes 26, 27 are grooves which are larger than the grooves 28 in the adhering zones 23, 24, 25. The adhesive expansion volumes 26, 27 have a largely triangular shaped cross-section. The adhesive expansion volumes 26, 27 allow excessively applied adhesive to fill when the fastening rail 11 is being mounted on the inner wall 7 of the service vehicle. This helps with the usability in regards to the process of installing the fastening rail by alleviating the problems that otherwise might occur when using too much adhesive.

The wall contacting portion 21 comprises two opposite sides, where the back side is on one side and from the other side two T-shaped portions 29 protrude from the wall contacting portion 21. The T-shaped portions 29 protrude from the wall contacting portion 21 perpendicularly to the back surface 22. Together the T-shaped portions create an undercut groove 30. The undercut groove 30 will be facing the inside of the service vehicle when the fastening rail 11 is secured to the inner wall 7 of the service vehicle 1.

The undercut groove 30 is used for fastening automotive vehicle equipment such i.e. cupboards, tool holders, shelves or other module units, as shown in Figs. 2, 3, 4 and 7.

The wall contacting portion 21 together with the T-shaped portions 29 form a wall receiving groove 38. The wall receiving groove 38 may also be described as comprising a back side 21, an oppositely arranged front side 32, connected by a ledge formed by the stem of the T-shaped portion 36. The fastening rail 11 comprises a back side comprising the wall contacting portion 21 and the back side 22. The fastening rail further comprises a front side 220 arranged on an oppositely arranged side from the back side of the fastening rail. The front side is arranged where the undercut groove 30 comprises an opening. The front side and back side of the fastening rail will be further described together with Fig. 11a-11c and Fig. 12b.

On a portion of respective T-shaped portions 29, are wall panel supporting protrusions 31. The wall panel supporting protrusions 31 protrude from the wall contacting portion 21 perpendicularly to the back surface 22. Between the underside of the top portion 32 of the T-shaped protrusion 29, which is forming wall panel supporting element 32, and the ends 33 of the two wall panel supporting protrusions 31 a wall receiving groove 38 is created, and an inner wall panel can be supported therein. Thus, the wall receiving groove 38 holds the inner wall panel in place during the mounting of the inner wall panel. It also serves as an additional safety measure, holding an inner wall panel in place, during a vehicle crash event.

Adjacent the wall panel supporting protrusions 31, two screw securing ridges 34 protrude from the wall contacting portion 21. They protrude perpendicularly to the back surface 22 on the same side of the wall contacting portion 21 as the T-shaped protrusions 29. The two screw securing ridges 34 forms a screw securing track 35 in the longitudinal direction of the fastening rail 11. The securing track 35 comprises of two opposite arranged inner walls 37 of the ridges 34 extending in the longitudinal direction of said securing track 35, which inner walls 37 during use are adapted to be screwed into using a self tapping screw. The screw securing track 35 is arranged so far away from the undercut groove 30 that the T-shaped protrusions 29 does not cover the opening 39 of the screw securing track 35, i.e. the screw securing tracks 35 are arranged so far away from the T-shaped protrusions so that inner wall panel securing screws securely can engage and hold an inner wall panel in place when screws are fastened into the screw securing track 35. The walls 37 of the screw securing track 35 may have means, for example grooves, for improving the engagement between threads of inner wall panel securing screws and the surface of the screw securing track 35.

The fastening rail 11 may also comprise means for holding electric cables thus adding cable holding properties to the rail. Such cable holding means may be an added edge, or a hole or a hook where i.e. a cable tie encircling a bundle of cables may be held in place.

The fastening rail 11 has been described as comprising a cross-section which is symmetrical on both sides of an axis A which is arranged in the middle of the undercut groove 30, i.e. that on both sides of the undercut groove 30 there are both screw securing members 34 and wall panel supporting elements 31. However, the fastening rails are not limited to this. Only one screw securing member 34 and one wall panel supporting element 31 may be arranged on one side of the undercut groove 30. On the other side of the undercut groove 30 the rail may have a different design. For example, the fastening rails 11 which are arranged in the upper part or the lower part of the back space 2, i.e. close to the roof or the floor may have a shape on one side of the undercut groove 30, which make a smooth transition to the roof or the floor (not shown) and which may allow the fastening rail 11 to be attached to or in contact with the roof or the floor.

Fig. 10 shows a close up of the fastening system 10 in Fig. 8 where the fastening rail 11b is attached to the inner surface of the vehicle surface 7 of the back space of the service vehicle using an adhesive 40. Attached to the fastening rail 11b are an upper and a lower inner wall panel 12c, 12d. The wall panels 12c, 12d are attached to the fastening rail 11 by securing elements 41. The securing elements are screws 41. The wall panels 12c, 12d are pre-drilled in order to make a hole through which the screw 41 can be inserted before it is screwed into the screw securing track 35. Alternatively, the screw can be a self drilling screw which is screwed through the inner wall panel 12c, 12d before being screwed into the screw securing track 35.

Fig. 11a shows the cross section B-B of the fastening system 10 in Fig. 10. Fig. 11a shows the inner wall panel 12c inserted into the wall receiving groove 38 and the inner wall panel 12c is supported from below by the stem 36 of the T-shaped portions 29. The stem 36 of the T-shaped portions 29 may also be seen as a ledge. The wall panel 12c is secured by the screw 41. The screw comprises a head 42 and a body 43. The screw body 43 protrudes through the inner wall panel 12c, 12d and the screw body 43 comprises a threaded portion. The threaded portion of the screw 41 engages the oppositely arranged walls 37 of the screw securing ridges 34 of the screw securing track 35. The inner wall panels 12c, 12d are secured by being pressed against the fastening rail 11 by the head 42 of the screw 41. Fig. 11a also shows the adhering zones 23, 24, 25 arranged to be attached to the inner surface 7 of the vehicle wall.

Fig. 11b-11e shows alternative cross-sectional shapes of the fastening rail 11 shown in Fig. 11a. The fastening rail 110 shown in Fig. 11b has a weight saving cross sectional shape as compared to the fastening rail shown in Fig. 11a. The weight of the fastening rail 110 is reduced by removing the inner wall panel supporting protrusions 31 and the wall panel supporting element 32 of the T-shaped portions 29 shown in Fig. 9. By removing the wall panel supporting element 32 of the T-shaped portions 29 a ledge 360 is formed. The ledge 360 together with the wall contacting portion 21 may be seen as comprising an L-shape. The ledge 360 is arranged for receiving and supporting an edge 370 of an inner wall panel 12c when fastening an inner wall panel 12c to the fastening rail 110. The ledge 360 further supports the inner wall panel 12c after the inner wall panel has been fastened to the fastening rail 110. The ledge 360 may thereby help reducing any transverse forces acting on the securing screw 42. Reducing transverse, or radially acting, forces of the securing screws 41 increases fatigue life of the securing screw 41 and may allow that securing screws 41 having a smaller diameter are used for securing the inner wall panel to the fastening rail 110.

Alternatives to completely removing the wall panel supporting element 32 shown in Fig. 9 may include that a part of the wall panel supporting element 32 is retained thereby forming a small edge strip or edge protrusion (not shown) for preventing the inner wall panel 12c from slipping off the ledge 360 during and/or after mounting of the inner wall panel 12c to the securing rail 110. The fastening rail in Fig. 11b is seen as having a ledge 360 on either side of the undercut groove 30. However the ledge may comprise a ledge on a side above the undercut groove 30 and comprising a wall receiving groove 38 on an oppositely arranged side below the undercut groove 30. Such an arrangement may be advantageous when an inner wall panel 12c is secured to two fastening rails. One edge portion of the inner wall panel may then first be inserted into a wall receiving groove 38 of a first fastening rail and then be moved into contact with a ledge 360 of a second fastening rail. The inner wall panel may then be secured to the first and second fastening rails by securing elements, or securing screws 41. The ledge 360 preferably has a depth being equal to or larger than the depth of the screw securing track 35 together with the thickness of the wall panel 12c or 12d.

Fig. 11c shows another alternative design the fastening rail shown in Fig. 11a not comprising the wall panel supporting protrusions 31 of the fastening rail 11 in Fig.11a. The fastening rail 110'in Fig. 11c comprises a wall receiving groove 380' adapted for receiving an edge of an inner wall panel. The wall receiving groove 380' is formed by two oppositely arranged surfaces 112', 113' connected by bottom surface 125 forming a ledge 360' of the wall receiving groove 380. A first groove wall 113' forms part of the wall contacting portion 21 and the oppositely arranged second groove wall 112' forms part of the T-shaped protrusion 29. The wall receiving groove 380 may be seen as having a U-shaped cross-section in the geometric plane of the cross-section B-B. Similar to the fastening rail 11 shown in Fig. 9 the fastening rail 110' comprises screw securing tracks 35 adapted for screwing in a securing screw 42 into.

When fastening an inner wall panel 12c, 12d to the fastening rail 110' the inner wall panel 12c, 12d is pressed by a screw head 42 of the screws 41 against at least one of the top portions 51 of the two screw securing ridges 34 forming the screw securing track 35 of the fastening rail 110'. The top portion 51 of either of the two screw securing ridges 34 may have a different shape. One of the top portions 51 may have a sharp or pointy shape adapted for indenting the inner wall panel 12c, 12d being pressed against the fastening rail 110' by the securing screw 41. Such a shape of a top portion 51 would further help with securing the inner wall panel 12c, 12d to the fastening rail 110', and reduces the risk for movement of the inner wall panel 110' along a direction transverse to the axial direction of the securing screw 41. Such a design may be advantageous when the inner wall panel is in a softer material such as a plastic, wood or a laminated wood material.

Attaching the fastening rail 11 to the vehicle wall 7 comprises the steps of: applying adhesives on the wall contacting area 22, and especially to the different adhering zones 23, 24, 25. Temporary fixating the fastening rail 11 against the inner surface of the vehicle wall 7 of the automotive vehicle with use of a temporary fixating member (not shown); and holding it in place until the adhesive has adhered and the temporary fixating member may be removed. Alternatively, the adhesive may be applied to the inner wall of the back space. The temporary fixating member may however be of the kind which does not have to be removed. The temporary fixating means may be a tape, a vacuum holder device or a fast setting adhesive which has been applied to part of the three fastening surfaces. It may further be a double sided tape covering parts of the adhering zones. It may also be applied to one of the adhering zones, instead of adhesive. When the adhesive has cured and the fastening rails 11 are arranged to the inner surface of the vehicle wall 7 of the back space 2 the wall panels 12 are arranged between the fastening rails, they are thereafter fixed to the fastening rails 11 by the screws. That is, each wall panel 12 is pressed between a fastening rail 11 and each screw head 42 of the screws 41. A washer (not shown) may be arranged between the screw head 42 and the wall panel 12c, 12d.

Fig. 11d shows the fastening rail 110" having a wall receiving groove 380' according to Fig. 11c, arranged above the undercut groove 30, and a different design of the wall receiving groove 380" arranged on an opposite side from the undercut groove 30. The design of the wall contacting portion 21 has a shape having an adhering zones 25 being having a smaller wall contact area compared to adhering zone 23. This increases the size of the adhesive expansion volumes 27 and increases the area of the groove wall 113 of the fastening rail back portion being in contact with an inner wall panel 12d. Fig. 11e shows an alternative fastening rail 110c comprising wall receiving grooves 380" on a side above and below the undercut groove 30.

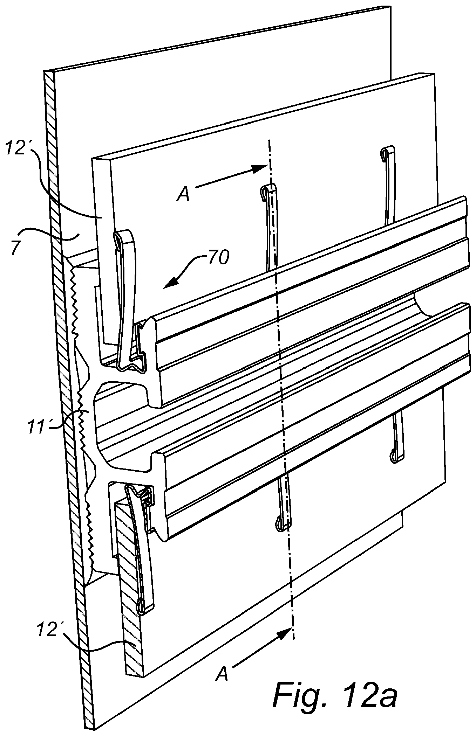

Fig. 12a and 12b shows a second embodiment of a fastening system 10', where the fastening rail 11' has a similar design as the fastening rail 11 in Fig. 8-11 except that it does not comprise the screw securing members 41, i.e. the screws and the wall panel supporting elements 31 in Fig. 9. A larger wall receiving space 38' is hence created on each side of the undercut groove 30' into which two wall panels 12' are respectively arranged. The wall panels 12' are pressed against the fastening rail 11' by securing elements 70 in the form of wall panel clips 70. The clips 70 are made from sheet metal and are a kind of snap clips. Each clip 70, has a L-shaped cross section. The bottom part 71 of the L-shaped clip which is close to the undercut groove 30' when mounted to the fastening rail 11', comprises an inverted V-shaped bend 72 and it ends with an upward protruding portion 74 which follows the shape of the T-shaped portions 29' of the fastening rail 11'. A bent portion 73 extends from the bottom part 71 on the opposite side and it abuts the wall panel 12' when arranged in the wall receiving space 38'.

The form of the clip improves the elastic properties of the clips. When the clips 70 are being mounted the user elastically deforms the clips 70, in order to place it in its intended position. After the clip has been mounted the clip will then want to return to its initial unloaded shape. If the clip cannot return to its initial shape, the result will be that the wall panel will be preloaded with a force due to the clips strive to return to its initial shape. This increases the pressing force the clips exert on the wall panels. It also makes mounting of the clips easier. The clip 70 may be shaped so that improper mounting of the clip is not possible. The clip 70 may also be shaped so that proper mounting of the clips gives of sound, such as a click sound, when the clips is in a mounted position. The clip 70 may have an extension in the longitudinal direction of the vehicle, when mounted, which is dependent on the material used for the clip and the shape of the clip so that the clip 70 works properly.

Further the clip 70 may have additional means for making mounting of the clips 70 simpler. The clip 70 may further have means for attaching cables to the snap clip 70.

The securing elements may also be made from plastic material.
In order to increase the pressing force from the wall securing elements, these may be made as a solid body of i.e. plastic material. Depending on the shape of such solid wall securing elements these may be mounted using tools. The securing elements may alternatively be made as a continuous long securing element having a length, in the vehicle direction, equal or longer than the height of the securing element. Wall panels may also be secured using a mix of different securing elements i.e. using screws and clips.

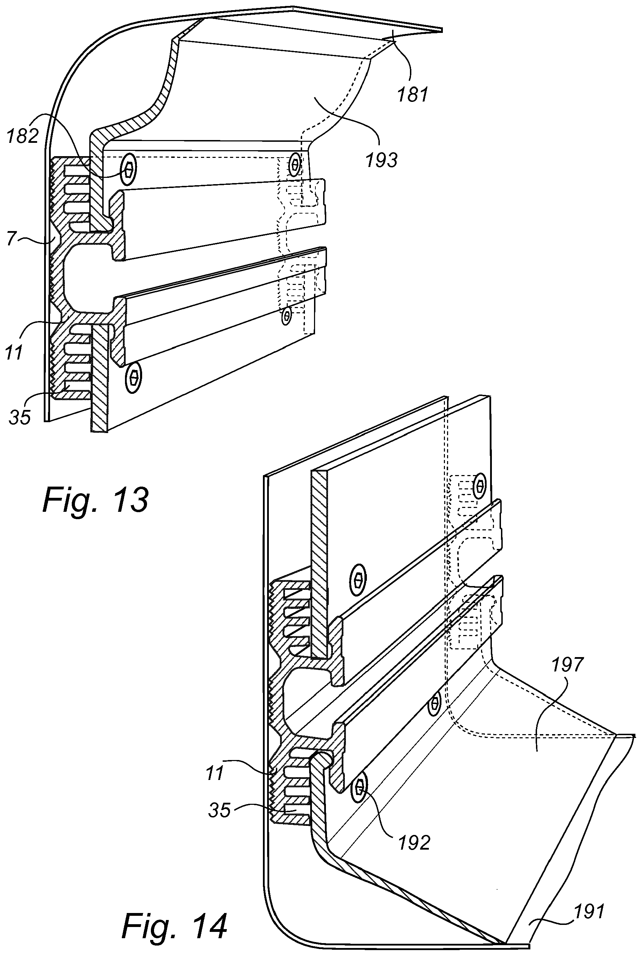

Fig. 13 shows a fastening rail 11 attached close to an inner ceiling surface 181 of a back space of a service vehicle. The fastening rail 11 is attached to an inner wall 7 of a vehicle wall. Secured to the fastening rail 11 by securing elements 182, i.e. a screw, is an edge covering panel 193. The securing element 182 is secured to the securing track 35 of the fastening rail 11 in a similar way as the wall panels are attached to the rail in Fig. 8.

Fig. 14 shows a fastening rail 11 attached close to an inner floor 191 of a back space of a service vehicle. The fastening rail 11 is attached to an inner wall 7 of a vehicle wall. Secured to the fastening rail 11 by securing elements 192, i.e. a screw, is an edge covering panel 197. The securing element 192 is secured to the securing track 35 of the fastening rail 11 in a similar way as the wall panels are attached to the rail in Fig. 8.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A fastening system (10, 10') adapted to be attached to an inner surface (7) of a cargo or a back space (2) of a service vehicle (1), said fastening system (10) comprising at least one elongated fastening rail (11, 11a, 11b, 11b', 11c', 11', 110, 110', 110", 110c) for fastening an inner wall panel (12a-12d), said elongated fastening rail comprising at least one undercut groove (30, 30') adapted for fastening an item (123, 133, 143, 153, 163, 173) to said at least one elongated fastening rail, said elongated fastening rail having a back side (22) for facing said inner surface (7) and a front side (220) comprising an opening of said undercut groove (30), said elongated fastening rail further comprising a back portion (21) separate from said undercut groove (30), and a ledge (36, 360, 360', 360") extending from said back portion (21) towards said front side (220) of said fastening rail; and
at least one securing element (41, 70, 122, 132, 142, 152, 162, 172, 182, 192), adapted to press said inner wall panel (12a-12d) against said back portion (21) of said fastening rail (11, 11a, 11b, 11b', 11c', 11'),
wherein said fastening rail (11, 11a, 11b, 11b', 11c', 11', 110, 110', 110", 110c) comprises at least one screw securing track (35) extending at least partly in the longitudinal direction of the fastening rail into which a screw (42) is adapted to be screwed into during use, **characterized in that** said screw securing track (35) comprises two oppositely arranged screw securing ridges (34) protruding from said back portion (21) and has a longitudinal extension in the longitudinal direction of said fastening rail.

2. A fastening system (10, 10') according to claim 1, wherein said back portion (21) and/or ledge (36, 360, 360', 360") has a longitudinal extension in the longitudinal direction of said fastening rail.

3. A fastening system (10, 10') according to any one of the preceding claims, wherein said at least one elongated fastening rail rail (11, 11a, 11b, 11b', 11c', 11', 110, 110', 110", 110c) further comprises a front portion (29, 29'), protruding from said ledge (36, 360, 360', 360"), forming a wall receiving groove (38, 38') together with said ledge and at least a portion of said back portion (21), of said elongated securing rail.

4. A fastening system (10, 10') according to claim 3, wherein said wall receiving groove (38, 38') has a substantially U-shaped cross-section in a geometric plane transverse to the longitudinal direction of said elongated fastening rail.

5. A fastening system (10, 10') according to any of the preceding claims, wherein, said securing element (41, 70, 122, 132, 142, 152, 162, 172, 198, 192) is an element, which is not a part of said fastening rail.

6. A fastening system (10, 10') according to any one of the preceding claims, wherein said at least one securing element (41, 70, 122, 132, 142, 152, 162, 172, 182, 192) is a screw (41) comprising a screw head (42) and an at least partly threaded portion (43), which screw head (42) is adapted to press against said item or said inner wall panel (12a, 12b, 12c, 12d) during use and to be screwed into said fastening rail (11, 11a, 11b, 11b', 11c').

7. A fastening system (10, 10') according to claim 1, wherein at least one of said screw secuding ridges (34) of said screw securing track (35) during use, is in contact with said inner wall panel (12a-12d).

8. A fastening system (10, 10) according to any one of the preceding claims, wherein said elongated securing rail (11, 11a, 11b, 11b', 11c', 11', 110, 110', 110", 110c) further comprises a wall contacting area (22) adapted to be attached to said inner surface (7) of said cargo or back space (2) of said service vehicle (1).

9. A fastening system (10, 10') according to claim 8, wherein said wall contacting area (22) is roughened and/or said wall contacting area (22) comprises grooves (28) extending in the longitudinal direction of the rail.

10. A fastening system (10, 10') according to any one of the preceding claims, wherein said fastening rail (11, 11a, 11b, 11b', 11c', 11', 110, 110', 110", 110c) is adapted to be attached to said inner surface (7) by adhesive.

11. A fastening system (10, 10') according to claim 10, wherein said adhesive is a glue or coated on a tape.

12. A fastening system (10, 10') according to one of the any one of the preceding claims, wherein said fastening rail (11, 11a, 11b, 11b', 11c', 11', 110, 110', 110", 110c) is adapted to be attached to said inner surface (7) by two different adhesives, wherein said first adhesive is a fast curing adhesive and said second adhesive is an adhesive which cures slower than said first adhesive.

13. A fastening system (10, 10') according to any one of claims 1-5 or 8-12, wherein said securing element is a clip (70).

14. A fastening system (10, 10') according to any one of the claims 1-13, wherein said item is a cable holder, an illuminating device, a hook, a fastening bracket or a lashing eyelet.

## Patentansprüche

1. Befestigungssystem (10, 10'), das ausgelegt ist, um an einer inneren Fläche (7) eines Lade- oder eines Hinterraums (2) eines Nutzfahrzeugs (1) angebracht sein, wobei das Befestigungssystem (10) Folgendes umfasst:
mindestens eine längliche Befestigungsschiene (11, 11a, 11b, 11b', 11c', 11', 110, 110', 110", 110c) zum Befestigen einer inneren Wandplatte (12a-12d), wobei die längliche Befestigungsschiene mindestens eine hinterschnittene Nut (30, 30') umfasst, die zum Befestigen eines Gegenstands (123, 133, 143, 153, 163, 173) an der mindestens einen länglichen Befestigungsschiene ausgelegt ist, wobei die längliche Befestigungsschiene eine Rückseite (22), die der inneren Fläche (7) zugewandt ist, und eine Vorderseite (220), die eine Öffnung der hinterschnittenen Nut (30) umfasst, hat, wobei die längliche Befestigungsschiene ferner einen Rückabschnitt (21), der von der hinterschnittenen Nut (30) getrennt ist, und eine Leiste (36, 360, 360', 360"), die sich von dem Rückabschnitt (21) hin zu der Vorderseite (220) der Befestigungsschiene erstreckt, umfasst, und
mindestens ein Sicherungselement (41, 70, 122, 132, 142, 152, 162, 172, 182, 192), das ausgelegt ist, um die innere Wandplatte (12a-12d) gegen den Rückabschnitt (21) der Befestigungsschiene (11, 11a, 11b, 11b', 11c', 11') zu drücken,
wobei die Befestigungsschiene (11, 11a, 11b, 11b', 11c', 11', 110, 110', 110", 110c) mindestens eine Schraubsicherungsbahn (35) umfasst, die sich zumindest teilweise in die Längsrichtung der Befestigungsschiene erstreckt, in die eine Schraube (42) zum Hineinschrauben während der Verwendung ausgelegt ist,
**dadurch gekennzeichnet, dass**
die Schraubsicherungsbahn (35) zwei gegenüberliegend angeordnete Schraubsicherungsstege (34) umfasst, die von dem Rückabschnitt (21) vorstehen, und eine Längserstreckung in die Längsrichtung der Befestigungsschiene hat.

2. Befestigungssystem (10, 10') nach Anspruch 1, wobei der Rückabschnitt (21) und/oder die Leiste (36, 360, 360', 360") eine Längserstreckung in die Längsrichtung der Befestigungsschiene hat.

3. Befestigungssystem (10, 10') nach einem der vorhergehenden Ansprüche, wobei die mindestens eine längliche Befestigungsschiene (11, 11a, 11b, 11b', 11c', 11', 110, 110', 110", 110c) ferner einen Vorderabschnitt (29, 29') umfasst, der von der Leiste (36, 360, 360', 360") vorsteht, der zusammen mit der Leiste und mindestens einem Abschnitt des Rückabschnitts (21) der länglichen Sicherungsschiene eine Wandaufnahmenut (38, 38') bildet.

4. Befestigungssystem (10, 10') nach Anspruch 3, wobei die Wandaufnahmenut (38, 38') einen im Wesentlichen U-förmigen Querschnitt in einer geometrischen Ebene quer zu der Längsrichtung der länglichen Befestigungsschiene hat.

5. Befestigungssystem (10, 10') nach einem der vorhergehenden Ansprüche, wobei das Sicherungselement (41, 70, 122, 132, 142, 152, 162, 172, 198, 192) ein Element ist, das kein Teil der Befestigungsschiene ist.

6. Befestigungssystem (10, 10') nach einem der vorhergehenden Ansprüche, wobei das mindestens eine Sicherungselement (41, 70, 122, 132, 142, 152, 162, 172, 182, 192) eine Schraube (41) ist, die einen Schraubenkopf (42) und einen zumindest teilweise gewundenen Abschnitt (43) umfasst, wobei der Schraubenkopf (42) ausgelegt ist, um gegen den Gegenstand oder die innere Wandplatte (12a, 12b, 12c, 12d) während der Verwendung zu drücken und in die Befestigungsschiene (11, 11a, 11b, 11b', 11c') geschraubt zu sein.

7. Befestigungssystem (10, 10') nach Anspruch 1, wobei mindestens einer der Schraubsicherungsstege (34) der Schraubsicherungsbahn (35) während der Verwendung mit der inneren Wandplatte (12a-12d) in Kontakt ist.

8. Befestigungssystem (10, 10') nach einem der vorhergehenden Ansprüche, wobei die längliche Sicherungsschiene (11, 11a, 11b, 11b', 11c', 11', 110, 110', 110", 110c) ferner einen Wandkontaktbereich (22) umfasst, der ausgelegt ist, um an der inneren Fläche (7) des Lade- oder Hinterraums (2) des Nutzfahrzeugs (1) angebracht zu sein.

9. Befestigungssystem (10, 10') nach Anspruch 8, wobei der Wandkontaktbereich (22) aufgeraut ist und/oder der Wandkontaktbereich (22) Nuten (28) umfasst, die sich in die Längsrichtung der Schiene erstrecken.

10. Befestigungssystem (10, 10') nach einem der vorhergehenden Ansprüche, wobei die Befestigungsschiene (11, 11a, 11b, 11b', 11c', 11', 110, 110', 110", 110c) ausgelegt ist, um an der inneren Fläche (7) durch ein Klebemittel angebracht zu sein.

11. Befestigungssystem (10, 10') nach Anspruch 10, wobei das Klebemittel ein Kleber ist oder auf einem Band beschichtet ist

12. Befestigungssystem (10, 10') nach einem der vorhergehenden Ansprüche, wobei die Befestigungsschiene (11, 11a, 11b, 11b', 11c', 11', 110, 110', 110", 110c) ausgelegt ist, um an der inneren Fläche (7) durch zwei unterschiedliche Klebemittel angebracht zu sein, wobei das erste Klebemittel ein schnell aushärtendes Klebemittel ist und das zweite Klebemittel ein Klebemittel ist, das langsamer aushärtet als das erste Klebemittel.

13. Befestigungssystem (10, 10') nach einem der Ansprüche 1-5 oder 8-12, wobei das Sicherungselement eine Klemme (70) ist.

14. Befestigungssystem (10, 10') nach einem der Ansprüche 1-13, wobei der Gegenstand ein Kabelhalter, eine Beleuchtungseinrichtung, ein Haken, ein Befestigungsbügel oder eine Zurröse ist.

## Revendications

1. Système de fixation (10,10') apte à être fixé à une surface intérieure (7) d'un espace de chargement ou d'un espace arrière (2) d'un véhicule de service (1), ledit système de fixation (10) comprenant
au moins un rail de fixation allongé (11, 11a, 11b, 11b', 11c', 11', 110,110', 110", 110c) pour la fixation d'un panneau de paroi intérieure (12a-12d), ledit rail de fixation allongé comprenant au moins une gorge contre-dépouillée (30,30') apte à fixer un article (123,133,143,153,163,173) audit au moins un rail de fixation allongé, ledit rail de fixation allongé comportant une face arrière (22) pour faire face à ladite surface intérieure (7) et une face avant (220) comprenant une ouverture de ladite gorge contre-dépouillée (30), ledit rail de fixation allongé comprenant en outre une partie arrière (21) séparée de ladite gorge de fixation contre-dépouillée (30), et un rebord (36,360,360', 360") s'étendant depuis ladite partie arrière (21) vers ladite face avant (220) dudit rail de fixation ; et au moins un élément de fixation (41,70, 122,132,142,152,162 172,182,192) apte à comprimer ledit panneau de paroi intérieure (12a-12d) contre ladite partie arrière (21) dudit rail de fixation (11, 11a, 11b, 11b', 11c', 11'), ledit rail de fixation (11, 11a, 11b, 11b', 11c', 11', 110,110', 110", 110c) comprenant au moins une piste de fixation de vis (35) s'étendant au moins partiellement dans le sens longitudinal du rail de fixation et dans laquelle une vis (42) est apte à être vissée en cours d'utilisation, **caractérisé en ce que** ladite piste de fixation de vis (35) comprend deux crêtes de fixation de vis disposées à l'opposé (34) et saillant de ladite partie arrière (21) et a une extension longitudinale dans le sens longitudinal dudit rail de fixation.

2. Système de fixation (10,10') selon la revendication 1, dans lequel ladite partie arrière (21) et/ou ledit rebord (36,360,360', 360") a une extension longitudinale dans le sens longitudinal dudit rail de fixation.

3. Système de fixation (10,10') selon l'une quelconque des revendications précédentes, dans lequel ledit au moins un rail de fixation allongé (11,11a, 11b, 11b', 11c', 11', 110,110', 110", 110c) comprend en outre une partie avant (29,29') saillant dudit rebord (36,360,360', 360") et formant une gorge de réception de paroi (38,38') avec ledit rebord et au moins une partie de ladite partie arrière (21) dudit rail de fixation allongé.

4. Système de fixation (10,10') selon la revendication 3, dans lequel ladite gorge de réception de paroi (38,38') a une section transversale sensiblement en forme de U dans un plan géométrique transversal au sens longitudinal dudit rail de fixation allongé.

5. Système de fixation (10,10') selon l'une quelconque des revendications précédentes, dans lequel ledit élément de fixation (41,70, 122,132,142,152,162 172,182,192) est un élément qui ne fait pas partie dudit rail de fixation.

6. Système de fixation (10,10') selon l'une quelconque des revendications précédentes, dans lequel ledit au moins un élément de fixation (41,70, 122,132,142,152,162 172,182 192) est une vis (41) comprenant une tête de vis (42) est une partie au moins partiellement filetée (43), laquelle tête de vis (42) est apte à appuyer contre ledit article ou ledit panneau de paroi intérieure (12a, 12b, 12c, 12) en cours d'utilisation et à être vissée dans ledit rail de fixation (11, 11a, 11b, 11b', 11c').

7. Système de fixation (10,10') selon la revendication 1, dans lequel au moins une desdites arêtes de fixation de vis (34) de ladite piste de fixation de vis (35), en cours d'utilisation, est en contact avec ledit panneau de paroi intérieure (12a, 12d).

8. Système de fixation (10,10') selon l'une quelconque des revendications précédentes, dans lequel ledit rail de fixation allongé (11, 11a, 11b, 11b', 11c', 11', 110, 110', 110", 110c) comprend en outre une zone de contact avec la paroi (22) apte à être rattachée à ladite surface intérieure (7) dudit espace de chargement ou espace arrière (2) dudit véhicule de service (1).

9. Système de fixation (10,10') selon la revendication 8, dans lequel ladite zone de contact avec la paroi (22) est rugosifiée et/ou ladite zone de contact avec la paroi (22) comprend des gorges (28) s'étendant dans le sens longitudinal du rail.

10. Système de fixation (10,10') selon l'une quelconque des revendications précédentes, dans lequel ledit rail de fixation (11, 11a, 11b, 11b', 11c', 11', 110,110',110",110c) est apte à être rattaché à ladite surface intérieure (7) par de l'adhésif.

11. Système de fixation (10,10') selon la revendication 10, dans lequel ledit adhésif est une colle ou est plaqué sur une bande.

12. Système de fixation (10,10') selon l'une quelconque des revendications précédentes, dans lequel ledit rail de fixation (11, 11a, 11b, 11b', 11c', 11', 110,110', 110", 110c) est apte à être rattaché à ladite surface intérieure (7) par deux adhésifs différents, ledit premier adhésif étant un adhésif à prise rapide et ledit second adhésif étant un adhésif qui prend plus lentement que ledit premier adhésif.

13. Système de fixation (10,10') selon l'une quelconque des revendications 1 à 5 ou 8 à 12, dans lequel ledit élément de fixation est un clip (70).

14. Système de fixation (10,10') selon l'une quelconque des revendications 1 à 13, dans lequel ledit article est un support de câbles, un dispositif d'éclairage, un crochet, une console de fixation ou un oeillet d'ancrage.
